(19) Europäisches Patentamt
European Patent Office
Office européen des brevets

(11) **EP 4 293 571 A1**

(12) **EUROPEAN PATENT APPLICATION**

(43) Date of publication:
**20.12.2023 Bulletin 2023/51**

(21) Application number: **22182587.0**

(22) Date of filing: **01.07.2022**

(51) International Patent Classification (IPC):
**G06N 3/04** $^{(2023.01)}$     **G06N 3/08** $^{(2023.01)}$
**G06T 7/00** $^{(2017.01)}$

(52) Cooperative Patent Classification (CPC):
**G06N 3/045; G06N 3/0464; G06T 7/00;** G06N 3/09

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2022 NL 2032161**

(71) Applicant: **NavInfo Europe B.V.**
**5657 DB Eindhoven (NL)**

(72) Inventors:
• **AKKAYA, Ibrahim Batuhan**
**Eindhoven (NL)**
• **KATHIRESAN, Senthilkumar Sockalingam**
**Eindhoven (NL)**
• **ARANI, Elahe**
**Eindhoven (NL)**
• **ZONOOZ, Bahram**
**Eindhoven (NL)**

(74) Representative: **van Breda, Jacobus**
**Octrooibureau Los & Stigter B.V.**
**P.O. Box 20052**
**1000 HB Amsterdam (NL)**

(54) **METHOD AND SYSTEM FOR MULTI-SCALE VISION TRANSFORMER ARCHITECTURE**

(57) A computer-implemented method for processing images in deep neural networks by: breaking an input sample into a plurality of non-overlapping patches; converting said patches into a plurality of patch-tokens; processing said patch-tokens in at least one transformer block comprising a multi-head self-attention block; providing a multi-scale feature module block in the at least one transformer block; using said multi-scale feature module block for extracting features corresponding to a plurality of scales by applying a plurality of kernels having different window sizes; concatenating said features in the multi-scale feature module block; providing a plurality of hierarchically arranged convolution layers in the multi-scale feature module block; and processing said features in said hierarchically arranged convolution layers for generating at least three multiscale tokens containing multiscale information.

Fig. 2

**Description**

CROSS-REFERENCE TO RELATED APPLICATIONS

This application claims priority to and the benefit of Netherland Patent Application No. 2032161, titled "METHOD AND SYSTEM FOR MULTI-SCALE VISION TRANSFORMER ARCHITECTURE", filed on June 14, 2022, and the specification and claims thereof are incorporated herein by reference.

BACKGROUND OF THE INVENTION

Field of the Invention

The invention relates to a computer-implemented method and a system for multi-scale vision transformer architecture deep neural networks.

Background Art

In recent years, deep neural networks (DNNs) have become a standard approach for processing images and videos in complex computer vision tasks such as image classification, object detection, and semantic segmentation. The DNNs consist of millions of learnable parameters and the style in which these parameters are arranged is known as their architecture. Currently, there are two major architectures, called Convolutional Neural Network (CNN) [8] and Transformer [7], used to build DNNs. Both architectures have their own advantages. The design of CNNs inherently includes how each pixel is spatially related to other pixels in an image, which helps to process the image efficiently with fewer data needed. On the other hand, Transformer has better accuracy, but it must be trained with large amounts of data. An ideal DNN architecture would combine the advantages of both the architecture.

In the CNN architecture, an image is progressively reduced in the spatial dimension. While reducing the spatial dimension, it learns different filters to extract the multi-scale features from the input image. By design, convolutional filters process local information and have a low receptive field. These features are used to make the final predictions based on the task. On the other hand, Transformers [6] have a global receptive field from the first layer of the network. They do it by breaking an image into many non-overlapping patches and processing it with a series of self-attention layers. In the self-attention layers, every token will be updated with a part of the information from all the other tokens (global information). Thus, CNN and Transformer have entirely different ways of processing the image to make the final predictions, and combining their advantages is not straightforward.

Pyramid Vision Transformers (PVT) [1] propose to change the Transformer architecture similarly to CNNs by progressively reducing the spatial dimension of the features in the deeper Transformer blocks. This helps PVT output multiple feature maps like CNNs. CvT [2] method brings in the local information into Transformers by using CNN layers to create a query (Q), key (K), and value (V) embeddings from the patch tokens. Q, K, and V are the basic components needed for self-attention [7]. However, this architectural change leads to the lack of global information in all transformer blocks.

T2T-ViT [3] proposes to add local information to a patch token without losing the global information by concatenating the neighboring tokens to it and using a soft split to reduce the length of the patch token. Just concatenating the local tokens might not produce the same useful local information that exists in CNNs. Crossformer [4] uses kernels of different sizes to generate the token embeddings so that they have multi-scale information embedded in them. CrossVit [5] propose another way of including multi-scale feature representations in Transformer models. It has a dual-branch transformer for combining tokens of various sizes to obtain more powerful image features.

However, all these methods include CNN layers or features in the Transformer yet do not efficiently add the multi-scale information into the Transformer models.

It is an object of the current invention to correct the shortcomings of the prior art and to provide a transformer architecture for extracting multi-scale information from the input image in an effective and efficient manner. This and other objects which will become apparent from the following disclosure, are provided with a computer-implemented method for image processing in deep neural networks, a data processing system, and a computer-readable medium, having the features of one or more of the appended claims.

Note that this application refers to a number of publications that are not to be considered as prior art vis-a-vis the present invention. Discussion of such publications herein is given for more complete background and is not to be construed as an admission that such publications are prior art for patentability determination purposes.

BRIEF SUMMARY OF THE INVENTION

In a first aspect of the invention, the computer-implemented method for image processing in deep neural networks comprises the steps of:

- breaking an input sample into a plurality of non-overlapping patches;
- converting said patches into a plurality of patch-tokens;
- processing said patch-tokens in at least one transformer block comprising a multi-head self-attention block,

wherein the method comprises the steps of:

- providing a multi-scale feature module block in the at least one transformer block;
- using said multi-scale feature module block for extracting features corresponding to a plurality of scales by applying a plurality of kernels having different window sizes;
- concatenating said features in the multi-scale feature module block;
- providing a plurality of hierarchically arranged convolution layers in the multi-scale feature module block; and
- processing said features in said hierarchically arranged convolution layers for generating at least three multiscale tokens containing multiscale information.

Within the scope of the invention the outputs of the convolution layers are referred to as features, and referred to as tokens after reorganization. When discussing hereinafter residual connection, this refers to providing another path for data to reach later parts of the neural network by skipping some layers.

The self-attention mechanism considers the globality of tokens while the convolutional layers consider local information. Combining the self-attention mechanism with the multi-sized convolutional layers enable maximizing the obtained multi-scale information. To be noted that patch tokens are inputs of the at least one transformer block, while the multiscale tokens are multiscale representations of said patch tokens and are outputs of the multi-scale feature module block and inputs of the multi-head self-attention block.

Advantageously, the method comprises the steps of providing a multi-headed self-attention block in the at least one transformer block, and feeding the at least three multiscale tokens as query, key, and value into the multi-head self-attention block. Instead of computing query, key, and values, the architecture of the computer-implemented method according to the current invention contains transformation for every scale implemented via 1x1 convolution. The query, key, and value are obtained by reorganizing the multi-scale features derived from the hierarchical convolutional layers so that the model focuses on utilizing multiscale information instead of learning query, key, and value transformation.

Furthermore, the patch-tokens need to be reshaped into a proper square/rectangle before they are fed to the convolutional layers. Therefore, the method comprises the steps of:

- arranging the patch-tokens in an image format; and
- processing said arranged patch-tokens in a first convolutional layer of the multi-scale feature module.

In order to enable memory and computation efficient implementation, the method comprises the step of processing a classification token along with the plurality of patch-tokens in the hierarchical convolutional layers of the multi-scale feature module using a depth-wise separable convolution comprising a depth-wise convolution followed by a pointwise convolution, wherein the classification token and the plurality of patch-tokens are concatenated before the pointwise convolution layers and wherein the classification token and the plurality of patch-tokens are separated before the depth-wise convolution layers.

The method comprises the step of rearranging and/or regrouping outputs of the hierarchical convolutional layers for providing the at least three multiscale tokens. The output features of each convolutional layer represent multi-scaled intermediate query's (q's), key's (k's) and value's (v's). Suitably, the q's, k's and v's are rearranged to obtain the final Query (Q), Key (K), and Value (V) with the multiscale feature.

The method comprises the step of providing a multi-layer perceptron block in the at least one transformer block for processing outputs of the multi-head self-attention block. Furthermore, the method comprises the step of applying residual connections after the multi-head self-attention and the multi-layer perceptron blocks. Additionally, the method comprises the step of using a classification head for projecting the classification token to category space for making a prediction.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the data processing system comprise a computer loaded with a computer program wherein said program is arranged for causing the computer to carry out the steps of the computer-implemented method according to any one of aforementioned steps.

In summary, the proposed computer-implemented method provides a transformer architecture to extract multi-scale information from the input image in an effective and efficient manner. The computer-implemented method introduces a multi-scale feature module that contains a few convolutional layers with substantially different kernel sizes. for focusing on maximizing the multi-scale information obtained. The architecture of the method contains transformation for every scale implemented via 1x1 convolution, whereas the other methods compute query, key, and values, obtained by reorganizing the multi-scale features so that the model focuses on utilizing multiscale information instead of learning query, key, and value transformation. Furthermore, the computer-implemented method uses depth-wise separable convolution for enabling memory- and computation-efficient implementations. Such architecture efficiently combines the strength of both CNN and transformer approaches. The computer-implemented method of the current invention outperforms the state-of-the-art method in terms of accuracy for the same or smaller number of parameters.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

BRIEF DESCRIPTION OF THE SEVERAL VIEWS OF THE DRAWINGS

The invention will hereinafter be further elucidated with reference to the drawing of an exemplary embodiment of a computer-implemented method according to the invention that is not limiting as to the appended claims. The accompanying drawings, which are incorporated into and form a part of the specification, illustrate one or more embodiments of the present invention and, together with the description, serve to explain the principles of the invention. The drawings are only for the purpose of illustrating one or more embodiments of the invention and are not to be construed as limiting the invention. In the drawings:

Figure 1 shows a first schematic diagram for the computer-implemented method according to an embodiment of the present invention;

Figure 2 shows a second schematic diagram for the computer-implemented method according to an embodiment of the present invention; and

Figure 3 shows a third schematic diagram for the computer-implemented method according to an embodiment of the present invention.

DETAILED DESCRIPTION OF THE INVENTION

Whenever in the figures the same reference numerals are applied, these numerals refer to the same parts.

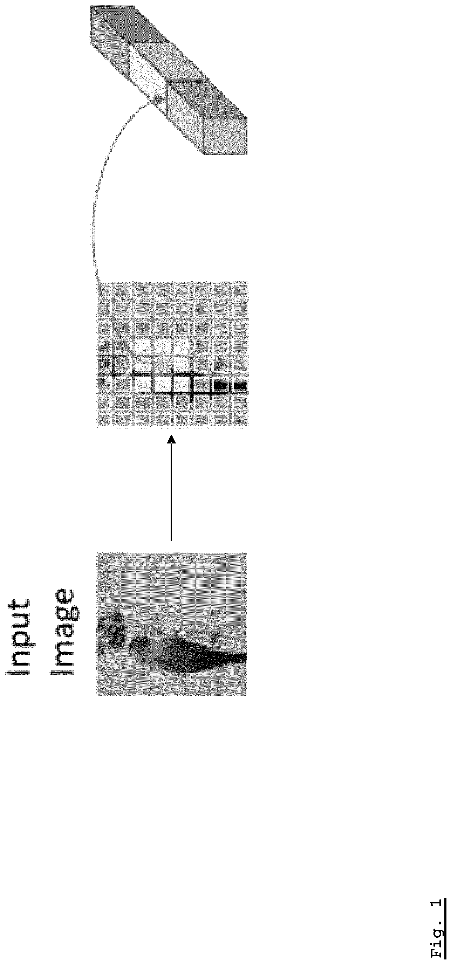

The Transformers applied according to the method of the invention break an image into non-overlapping patches and these patches are converted into tokens. These tokens while being processed in the Transformer blocks, a long-range relation is established owing to the self-attention mechanism which considers all the other tokens (global information). However, the tokens do not contain multi-scale information. Multi-scale information has proven to be significant in the case of CNNs, it is therefore added to the tokens in the transformer architecture using CNN layers. In particular, multiple kernels are applied with substantially different window sizes to extract features corresponding to various scales. The term "substantially different window sizes" means that most of the kernels are applied with different window sizes while some kernels may be applied with the same window size. Next, these features are concatenated to generate a token that contains multi-scale information as shown in figure 1.

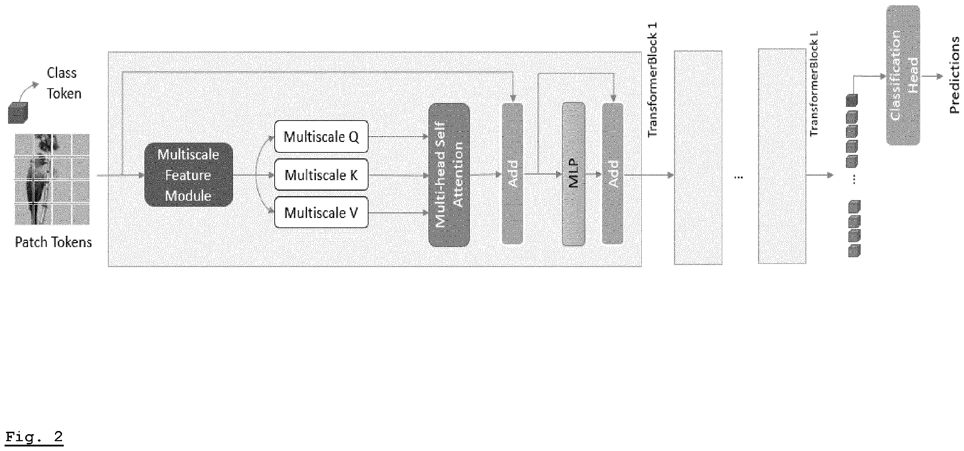

The Transformer architecture according to the current invention comprises at least one Transformer block, preferably, L consecutive blocks as shown in figure 2 wherein each Transformer block comprises a multi-scale feature module (MFM), multi-headed self-attention (MHSA) and multi-layer perception (MLP) blocks. Residual connections are applied after MHSA and MLP blocks. In the final layer, a classification head projects the classification token to category space in order to make a prediction. Contrary to the known Transformer architecture [6] the Transformer architecture according to the invention comprises a Multiscale Feature Module (MFM) that takes the input patch tokens from the input image or from the previous blocks and outputs tokens comprising multiscale information. The self-attention layer needs three different representations of the patch tokens, which are known as query, key, and value. Hence the MFM according to the current invention outputs the same format.

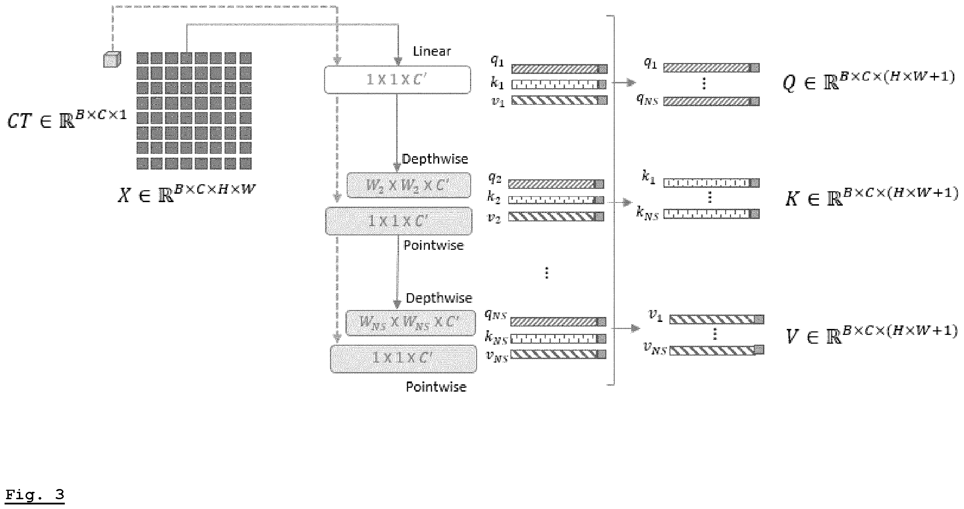

Because of its local connection, a convolutional neural network (CNN) is effective at extracting local spatial information. MFM comprises several convolution blocks (e.g. 3 blocks) , hierarchically arranged with kernel sizes of 1, W2, ...WNS (e.g. W2=3, W3=5) where NS is the number of scales to be utilized. The MFM architecture is shown in Fig 3. The number of channels of the convolution blocks is defined as:

$$C' = \frac{3 \times C}{NS}$$

where C is the number of channels of patch tokens. The input of the first convolutional layer is the patch tokens rearranged in an image format (without a classification token). The output features of each convolutional layer represent different scale information along the spatial dimension and Q, K, and V representation of the corresponding scale across the channel dimension. The intermediate (qns,kns,vns) e.g. (q1,k1,v1) ,(q2,k2,v2)... in figure3) are rearranged into (q1...qns), (k1...kns), (v1...vns) to obtain the final Q, K, and V with the multiscale feature.

In the Transformers, it is important that the learnable task-specific token, i.e., classification token, is processed along with all the input patch tokens so that it embeds the features useful for final prediction. This is not possible if convolutional layers are used, because the patch tokens (H × W) along with the classification token (+ 1) cannot be reshaped into a proper square/rectangle. To overcome this, depth-wise separable convolutions [11] are used. A depth-wise separable convolution comprises a depth-wise convolution followed by a pointwise convolution. A pointwise convolution (1 X 1), similarly to a linear layer, does not need a square/rectangle shaped input.

So, in MFM, the classification token is concatenated to patch tokens before the pointwise convolution layers and separated before the depth-wise convolution layers. Overall, MFM presents an efficient way of using convolution layers to produce multiscale Q, K and V along with class tokens.

Analysis

To evaluate the effect of the proposed Multiscale Feature Module on the Transformer architecture, the model is trained on ImageNet-100, which is a small subset (100 classes) of the Imagenet dataset [10]. The results are presented in Table 1. The results show that, the computer-implemented method according to the invention improves the performance significantly without increasing the number of parameters of the model irrespective of the size.

Table 1: Comparison of the proposed Transformer architecture with the baseline standard Transformer architecture (DeiT) on ImageNet 100 dataset.

| Model Name | Parameter | Top 1 Accuracy (%) | Top 5 Accuracy (%) |
|---|---|---|---|
| DeiT-Tiny | 5M | 55.5 | 78.7 |
| DeiT-Tiny-MFM | 5M | 64.18 | 84.74 |
| DeiT-Small | 22M | 58.0 | 78.54 |
| DeiT-Small-MFM | 22M | 65.58 | 84.64 |
| DeiT-Base | 86M | 59.82 | 79.74 |
| DeiT-Base-MFM | 86M | 69.56 | 86.68 |

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the computer implemented method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

References:

1. Wenhai Wang, Enze Xie, Xiang Li, Deng-Ping Fan, Kaitao Song, Ding Liang, Tong Lu, Ping Luo, and Ling Shao. Pyramid vision transformer: A versatile backbone for dense prediction without convolutions. In Proceedings of the IEEE/CVF International Conference on Computer Vision, pages 568-578, 2021.

2. Wu, H., Xiao, B., Codella, N., Liu, M., Dai, X., Yuan, L. and Zhang, L., 2021. Cvt: Introducing convolutions to vision transformers. In Proceedings of the IEEE/CVF International Conference on Computer Vision (pp. 22-31).

3. Li Yuan, Yunpeng Chen, Tao Wang, Weihao Yu, Yujun Shi, Zi-Hang Jiang, Francis EH Tay, Jiashi Feng, and Shuicheng Yan. Tokens-to-token vit: Training vision transformers from scratch on imagenet. In Proceedings of the IEEE/CVF International Conference on Computer Vision, pages 558-567, 2021

4. Wang, W., Yao, L., Chen, L., Cai, D., He, X. and Liu, W., 2021. Crossformer: A versatile vision transformer based on cross-scale attention. arXiv e-prints, pp.arXiv-2108.

5. Chen, C.F.R., Fan, Q. and Panda, R., 2021. Crossvit: Cross-attention multi-scale vision transformer for image classification. In Proceedings of the IEEE/CVF International Conference on Computer Vision (pp. 357-366).

6. Dosovitskiy, A., Beyer, L., Kolesnikov, A., Weissenborn, D., Zhai, X., Unterthiner, T., Dehghani, M., Minderer, M., Heigold, G., Gelly, S. and Uszkoreit, J., 2020. An image is worth 16x16 words: Transformers for image recognition at scale. arXiv preprint arXiv:2010.11929.

7. Vaswani, A., Shazeer, N., Parmar, N., Uszkoreit, J., Jones, L., Gomez, A.N., Kaiser, Ł. and Polosukhin, I., 2017. Attention is all you need. Advances in neural information processing systems, 30.

8. He, K., Zhang, X., Ren, S. and Sun, J., 2016. Deep residual learning for image recognition. In Proceedings of the IEEE conference on computer vision and pattern recognition (pp. 770-778).

9. Chefer, H., Gur, S. and Wolf, L., 2021. Transformer interpretability beyond attention visualization. In Proceedings of the IEEE/CVF Conference on Computer Vision and Pattern Recognition (pp. 782-791).

10. Deng, J., Dong, W., Socher, R., Li, L.J., Li, K. and Fei-Fei, L., 2009, June. Imagenet: A large-scale hierarchical image database. In 2009 IEEE conference on computer vision and pattern recognition (pp. 248-255). Ieee.

11. Chollet, F., 2017. Xception: Deep learning with depthwise separable convolutions. In Proceedings of the IEEE conference on computer vision and pattern recognition (pp. 1251-1258).

**Claims**

**1.** A computer-implemented method for image processing in a deep neural network comprising the steps of:

breaking an input sample into a plurality of non-overlapping patches;
converting said patches into a plurality of patch-tokens; and
processing said patch-tokens in at least one transformer block;

**characterized in that** the method further comprises the steps of:

> providing a multi-scale feature module block in the at least one transformer block;
> using said multi-scale feature module block for extracting features corresponding to a plurality of scales by applying a plurality of kernels having different window sizes;
> concatenating said features in the multi-scale feature module block;
> providing a plurality of hierarchically arranged convolution layers in the multi-scale feature module block; and
> processing said features in said hierarchically arranged convolution layers for generating at least three multi-scale-tokens comprising multiscale information.

2. The computer-implemented method according to claim 1 **characterized in that** the method further comprises the steps of:

> providing a multi-headed self-attention block in the at least one transformer block; and
> feeding the at least three multiscale tokens as query, key, and value into the multi-head self-attention block.

3. The computer-implemented method according to claim 1 or 2, **characterized in that** the method comprises the steps of:

> arranging the patch-tokens in an image format; and
> processing said arranged patch-tokens in a first convolutional layer of the multi-scale feature module.

4. The computer-implemented method according to any one of claims 1 - 3 **characterized in that** the method comprises the step of processing a classification token along with the plurality of patch-tokens in the hierarchical convolutional layers of the multi-scale feature module block using a depth-wise separable convolution comprising a depth-wise convolution followed by a pointwise convolution, wherein the classification token and the plurality of patch-tokens are concatenated before the pointwise convolution layers, and wherein the classification token and the plurality of patch-tokens are separated before the depth-wise convolution layers.

5. The computer-implemented method according to any one of claim 1 - 4 **characterized in that** the method comprises the step of rearranging and/or regrouping outputs of the hierarchical convolutional layers for providing the at least three multiscale tokens.

6. The computer-implemented method according to any one of claims 1 - **5characterized in that** the method comprises the step of providing a multi-layer perceptron block in the at least one transformer block for processing outputs of the multi-head self-attention block.

7. The computer-implemented method according to claim **6characterized in that** the method comprises the step of applying residual connections after the multi-head self-attention and after multi-layer perceptron blocks.

8. The computer-implemented method according to any one of claims 4 - 7, further comprising the step of using a classification head for the classification token to category space for making a prediction.

9. A computer-readable medium provided with a computer program, **characterized in that** when said computer program is loaded and executed by a computer, said computer program causes the computer to carry out the steps of the computer-implemented method according to any one of claims 1-8.

10. A data processing system comprising a computer loaded with a computer program, **characterized in that** said program is arranged for causing the computer to carry out the steps of the computer-implemented method according to any one of claims 1-8.

Input Image

Fig. 1

Fig. 2

Fig. 3

Europäisches
Patentamt

European
Patent Office

Office européen
des brevets

# EUROPEAN SEARCH REPORT

Application Number

EP 22 18 2587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUNHE GAO ET AL: "A Multi-scale Transformer for Medical Image Segmentation: Architectures, Model Efficiency, and Benchmarks", ARXIV.ORG, CORNELL UNIVERSITY LIBRARY, 201 OLIN LIBRARY CORNELL UNIVERSITY ITHACA, NY 14853, 28 February 2022 (2022-02-28), XP091166477, * page 1 - page 8 * | 1-10 | INV. G06N3/04 G06N3/08 G06T7/00 |
| X,D | WENXIAO WANG ET AL: "CrossFormer: A Versatile Vision Transformer Based on Cross-scale Attention", ARXIV.ORG, CORNELL UNIVERSITY LIBRARY, 201 OLIN LIBRARY CORNELL UNIVERSITY ITHACA, NY 14853, 31 July 2021 (2021-07-31), XP091019309, * page 1 - page 5 * | 1-10 | |

**TECHNICAL FIELDS SEARCHED (IPC)**

G06N
G06T
G06K
G06V

The present search report has been drawn up for all claims

| Place of search | Date of completion of the search | Examiner |
|---|---|---|
| The Hague | 23 December 2022 | Bohn, Patrice |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

\& : member of the same patent family, corresponding
　　document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- NL 2032161

### Non-patent literature cited in the description

- **WENHAI WANG ; ENZE XIE ; XIANG LI ; DENG-PING FAN ; KAITAO SONG ; DING LIANG ; TONG LU ; PING LUO ; LING SHAO.** Pyramid vision transformer: A versatile backbone for dense prediction without convolutions. *Proceedings of the IEEE/CVF International Conference on Computer Vision,* 2021, 568-578
- **WU, H. ; XIAO, B. ; CODELLA, N. ; LIU, M. ; DAI, X. ; YUAN, L. ; ZHANG, L.** Cvt: Introducing convolutions to vision transformers. *Proceedings of the IEEE/CVF International Conference on Computer Vision,* 2021, 22-31
- **LI YUAN ; YUNPENG CHEN ; TAO WANG ; WEIHAO YU ; YUJUN SHI ; ZI-HANG JIANG ; FRANCIS EH TAY ; JIASHI FENG ; SHUICHENG YAN.** Tokens-to-token vit: Training vision transformers from scratch on imagenet. *Proceedings of the IEEE/CVF International Conference on Computer Vision,* 2021, 558-567
- **WANG, W. ; YAO, L. ; CHEN, L. ; CAI, D. ; HE, X. ; LIU, W.** Crossformer: A versatile vision transformer based on cross-scale attention. *pp.arXiv-2108,* 2021
- **CHEN, C.F.R. ; FAN, Q. ; PANDA, R.** Crossvit: Cross-attention multi-scale vision transformer for image classification. *Proceedings of the IEEE/CVF International Conference on Computer Vision,* 2021, 357-366
- **DOSOVITSKIY, A. ; BEYER, L. ; KOLESNIKOV, A. ; WEISSENBORN, D. ; ZHAI, X. ; UNTERTHINER, T. ; DEHGHANI, M. ; MINDERER, M. ; HEIGOLD, G. ; GELLY, S.** An image is worth 16x16 words: Transformers for image recognition at scale. *arXiv:2010.11929,* 2020
- **POLOSUKHIN, I.** Attention is all you need. *Advances in neural information processing systems,* 2017, 30
- **HE, K. ; ZHANG, X. ; REN, S. ; SUN, J.** Deep residual learning for image recognition. *Proceedings of the IEEE conference on computer vision and pattern recognition,* 2016, 770-778
- **CHEFER, H. ; GUR, S. ; WOLF, L.** Transformer interpretability beyond attention visualization. *Proceedings of the IEEE/CVF Conference on Computer Vision and Pattern Recognition,* 2021, 782-791
- Imagenet: A large-scale hierarchical image database. **DENG, J. ; DONG, W. ; SOCHER, R. ; LI, L.J. ; LI, K. ; FEI-FEI, L.** 2009 IEEE conference on computer vision and pattern recognition. Ieee, June 2009, 248-255
- **CHOLLET, F.** Xception: Deep learning with depthwise separable convolutions. *Proceedings of the IEEE conference on computer vision and pattern recognition,* 2017, 1251-1258